# EUROPEAN PATENT SPECIFICATION

(11) **EP 1 181 798 B1**
(45) Date of publication and mention of the grant of the patent: **02.11.2005**
(21) Application number: 00931513.6
(22) Date of filing: 01.06.2000
(51) Int. Cl.: H04L 29/06, H04Q 7/22

(54) **BEARER ACCESS IN WIRELESS COMMUNICATION SYSTEMS**
ÜBERTRAGUNGSWEGZUGRIFF IN DRAHTLOSEN TELEKOMMUNIKATIONSSYSTEMEN
ACCES A UN SUPPORT DANS DES SYSTEMES DE COMMUNICATION SANS FIL

(30) Priority: 01.06.1999 IE 990451
(43) Date of publication of application: 27.02.2002
(73) Proprietor: Markport Limited, Dublin 1 (IE)
(72) Inventor: SULLIVAN, Owen, Galway (IE); DOYLE, John, Bray, County Wicklow (IE)
(74) Representative: Weldon, Michael James
(86) International application number: PCT/IE2000/000070
(87) International publication number: WO 2000/074342

(56) References cited:
- WO-A-99/14877
- MARTINI G ET AL: "DISTRIBUTED ARCHITECTURE FOR APPLICATIONS BASED ON THE GSM SHORT MESSAGE SERVICE" INTERNATIONAL WORKSHOP ON SERVICES IN DISTRIBUTED AND NETWORKED ENVIRONMENTS,XX,XX, 5 June 1995 (1995-06-05), pages 140-145, XP000612264
- TURO HEIKKINEN: "Wireless Application Protocol" MULTIMEDIASEMINAARI, 8 - 8 April 1999, pages 1-7, XP002148057

## Description

### INTRODUCTION

### Field of the Invention

The invention relates to access of servers to Wireless Application Protocol (WAP) bearer systems.

At present, it is known to provide an interface, and a development environment for such an interface, which allows access to Short Message Service Centres (SMSCs) via the (Short Message Peer-to-Peer) SMPP protocol. WO 99/14877 for example describes a uniform interface to server applications and transmission program modules for bearer communication. These products are very effective for the particular interfacing involved. However, many developers for environments such as Web server applications are unfamiliar with wireless interfacing functionality. Also, those developers who are expert in this area often prefer to maintain the bearer-side interfacing functionality private and avoid the problems associated with providing backwards and forwards compatibility and ensuring correct use. Such bearer developers also have the problem of testing their interfaces on multiple server platforms.

The invention is directed towards providing a bearer interface layer to address these problems.

### SUMMARY OF THE INVENTION

According to the invention, there is provided a wireless server hosting server applications, comprising an interface layer comprising a uniform interface to the server, and a bearer interface having a program associated with each of a plurality of bearer systems, characterised in that,
each of said programs is a bearer module;
the bearer interface comprises a bearer module interface comprising means for binding said bearer modules; and
the interface layer further comprises between the uniform interface and the bearer module interface:
   a bearer manager comprising means for registering bearer modules in response to server application calls, and for indicating bearer module status;
   a configuration manager comprising means for maintaining configuration data relating to bearer modules and for responding to server application calls for a configuration list and for returning information regarding network type, bearer system type, and address type to server applications.

In one embodiment, the configuration manager comprises means for capturing bearer module information.

In one embodiment, the configuration manager comprises means for maintaining a configuration file for every bound bearer module.

In one embodiment, the bearer manager comprises means for responding to server application calls to register a bearer module.

In one embodiment, the bearer manager comprises means for making a bind attempt to bind a bearer module to a transport mechanism.

In one embodiment, the bearer manager comprises means for responding to application calls to disconnect from a bearer module.

In one embodiment, the interface layer includes a blacklist and whitelist manager comprising means for automatically testing all non-secure traffic.

In one embodiment, the blacklist and whitelist manager comprises means for filtering traffic according to parameters set by a server application.

In one embodiment, the interface layer includes a callback handler comprising means for allowing a server application to call routines for pre-processing and post-processing of WDP packets.

In one embodiment, the interface layer includes a log function comprising means for logging test data from a bearer module under test, and for providing said data to a requesting server application.

In one embodiment, the interface layer includes a billing function comprising means for generating billing data on the basis of criteria supplied by a server application.

In one embodiment the server comprises WSP and WTP layers over the interface layer.

### DETAILED DESCRIPTION OF THE INVENTION

### Brief Description of the Drawings

The invention will be more clearly understood from the following description of some embodiments thereof, given by way of example only with reference to the accompanying drawings in which:
Fig. 1 is an overview diagram showing the context of an interface layer of the invention;
Fig. 2 is a diagram showing the structure of the interface layer; and
Figs. 3 and 4 are diagrams illustrating uses of the interface layer; and
Fig. 5 is a diagram illustrating signal interactions.

### Description of the Embodiments

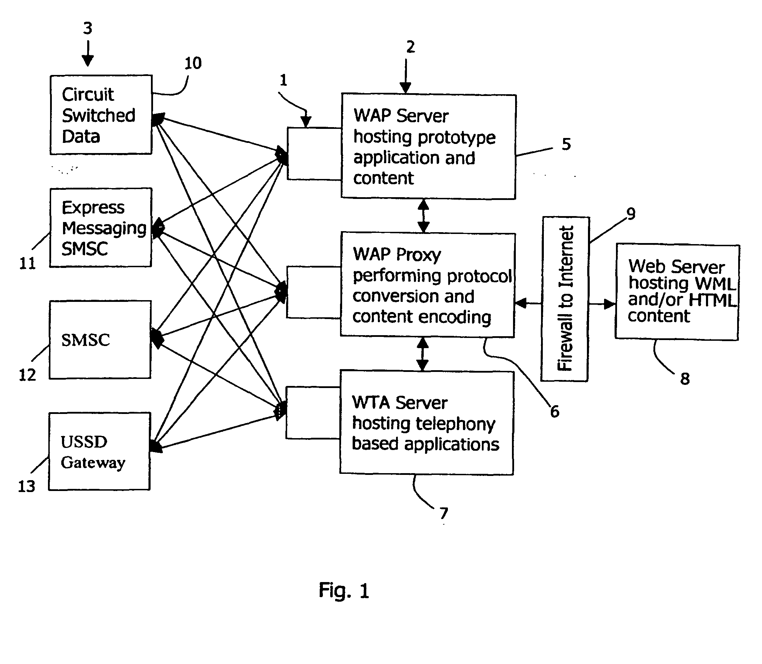

Referring to Fig. 1, interface layers 1 allow access by wireless servers 2 to bearer systems 3. In the embodiment illustrated, the servers 2 include:-
- a WAP server 5 hosting prototype application and content,
- a WAP proxy 6 performing protocol conversion and content encoding, and
- a WTA server 7 hosting telephony based applications.

The servers are connected to a Web server 8 via a Firewall 9. The bearer systems are in this embodiment:-
- a Circuit Switched Data bearer system 10,
- an Express Messaging SMSC bearer system 11,
- an SMSC bearer system 12, and
- a USSD gateway bearer system 13.

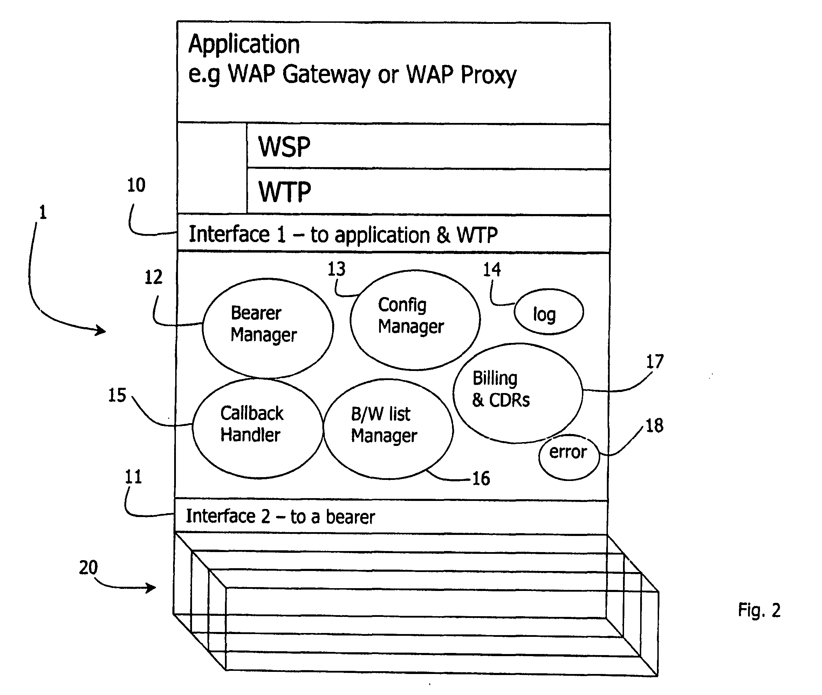

Referring to Fig. 2 each interface layer 1 comprises a server interface 10 to the applications and WTP (Wireless Transaction Protocol) layer of the server. The interface 10 is uniform in its interfacing operations to all of the server applications. It also comprises an interface 11 to bearer system interfacing modules 20, called "bearers" or "bearer modules" in this specification. Between these two interfaces there is:
a bearer manager 12,
a configuration manager 13,
a log 14,
a callback handler 15,
a blacklist/whitelist manager 16,
a billing and CDR function 17, and
an error function 18.

The interface 10 is a uniform interface to all of the server applications and the interface 11 allows bearers 20 to be loaded and offers their services to the applications.

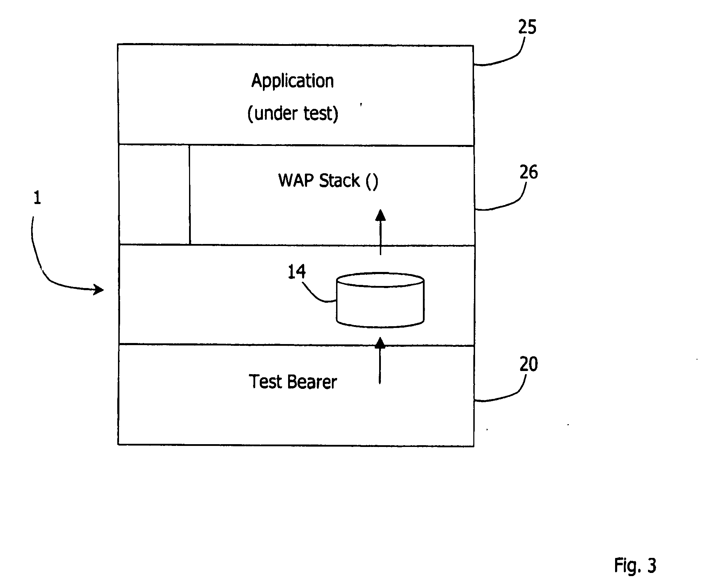

Referring to Fig. 3, one of the bearers 20 is a test bearer which writes to the log 14 and the log 14 returns responses to an application 25 on a WAP stack 26. This is a convenient framework for creation of new bearer modules 20. It also serves to examine and explain the facilities offered by an existing bearer 20. It is thus very suitable for testing bearer modules 20 and allows short development times.

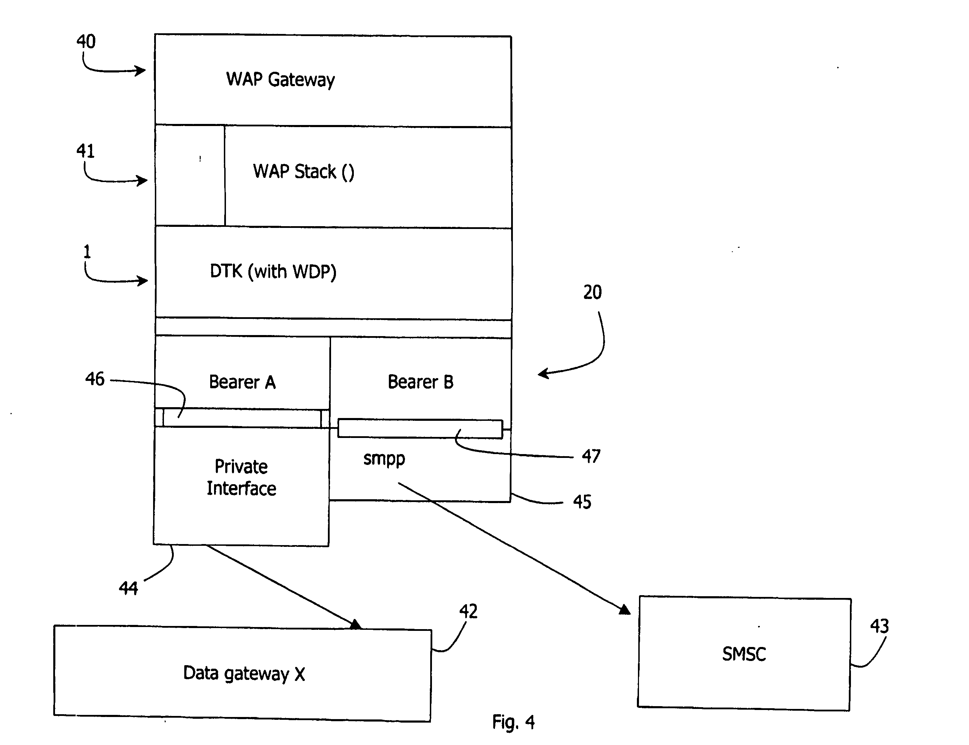

Referring to Fig. 4, a WAP gateway 40 having a WAP stack 41 uses the interface layer 1 to access a data gateway 42 and an SMSC 43. Each of these bearer systems is accessed via a bearer module 20 (Bearer A and Bearer B). However the gateway 42 is also accessed by a private interface 44 to be kept secret, while the SMSC is accessed via SMPP 45 (which is public). It will thus be appreciated that the layer 1 allows versatility in the manner in which bearer developers may link their bearer system with a server: a private or a public protocol may be used. All of the bearer modules 20 are bound by the rules of the interface 11, but may or may not be private on the bearer system side. This is illustrated in Fig. 4 in which there is a secret interface 46 and an SMPP interface 47 on the bearer system side. Each bearer module 20 consists of one or more bearer files and bearer configuration files. Where possible, bearer modules are designed for dynamic loading but where this is not possible or not desirable static linking of bearer modules is supported. The following describes the functions between the interfaces 10 and 11 in more detail.

### Configuration manager 13

The manager 13 maintains a file which specifies which bearer modules are present, and there is a configuration file of bearer module parameters for each bearer module.

### Bearer manager 12

The bearer manager 12 is responsible for the loading and management of the bearer modules. It performs version checking and license checking

### Billing & CDRs 17

This can be set to be an automatic operation to generate billing information (and prepaid queries) for all non secure traffic or it can be invoked by the server application for all types of traffic. Billing is on a basis set by the server application, such as per-URL or per data volume.

### White & Blacklist Manager 16

This can be set to be in 'automatic operation' and automatically test all non-secure traffic, or can be invoked by a server application for required types of traffic. The contents of the lists are URLs or originator addresses.

### Callback Handler 15

This allows the server application to request the layer 1 call its routines to provide extended pre and post processing ofWDP packets.

The calls available to the server applications are set out in the table below.

| | | |
|---|---|---|
| wdc_bearer_list | Returns the list of bearer modules 20 configured on the server | |
| wdc_info | Get information about a specific bearer module.20 | |
| wdc_connect | Connect to a bearer module 20 | |
| wdc_send | Send a message to the specified bearer system | |
| wdc_get | Get a message from a specified bearer system | |
| wdc_param | Get details of a configuration parameter from a configuration file | |
| | | |
| wdc_log | Create a log entry in the log/trace files. | |
| | | |
| | | |
| wdc_close | Disconnect from a bearer module, | |

The following handlers are provided to the bearer developer

| | | |
|---|---|---|
| wdc_register | Handle the registration of a bearer module. | |
| wdc_connect | Connect to a bearer module. | |
| wdc_send | Send a message to the specified bearer | |
| wdc_get | Get a message from a specified bearer | |
| wdc_param | Get details of a configuration parameter from a configuration files | |
| wdc_info | Get information about a specify bearer module. | |
| wdc_log | Create a log entry in the log/trace files. | |
| | | |
| | | |
| wdc_close | Disconnect from a bearer module. | |

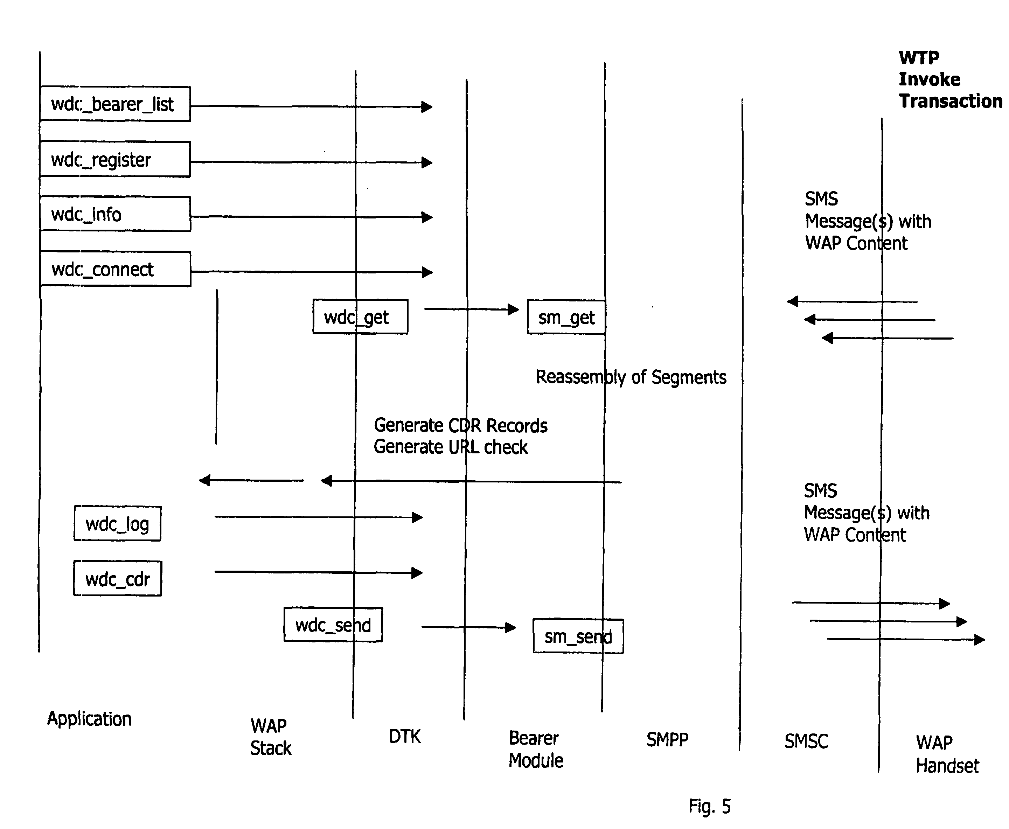

Some of the above calls are illustrated in Fig. 5, in which server applications communicate with an SMSC bearer system for bi-directional transfer of WAP content. The following describes the calls in more detail, with examples of code.

### wdc_bearer_list

Returns the list of bearer modules configured by the system. The call actually returns the value of the bearer list parameter from the wdc-dtk.ini (layer 1 configuration file).

Each item in the bearer list is known as a bearer tag and can be used to retrieve information on that bearer using the "wdc_info" call.
wdc-dtk.ini
[main]
Bearer_List = SMSC01, SMSC_DG, USSD, CSD23, EXP-001

Each of the items in the list will have their own section in the ".ini" file.
[SMSC01]
bearer_modue = "smsc01/smsc3-4"
parameter_file = "smsc01/smsc.ini"
network = "GSM"
bearer_type = "SMS"
address_type = "GSM_MSISDN"
assigned_number = "0x03"

### wdc_info

Returns an INFO element for a connection. The information returned includes the information from the "Network Bearer table" defined by WAP.
- Network
- Bearer type
- Address Type
- Assigned Number

A connection is not required to obtain information about the bearer.

When a new bearer module 20 is being created a handler for each of the above calls is provided. How the call is implemented is decided by the developer of each bearer module within the constraints imposed by the interface 11. For example a developer can choose to implement the "wdc_parm" handler to read from a flat file, to read from a database or to permanently return a blank value.

### wdc_register

This is called by the application to load/register a specific bearer module. One of the parameters passed is the version identifier of the interface to ensure that only modules of a correct or later version are loaded. If the layer 1 locates an older version of the bearer module then that which it expects an error is returned.

### wdc_connect

This function is used by the application to connect to a bearer. It makes an application layer connection to the bearer. The bearer module should, on a 'bind', attempt to connect/bind to the transport mechanism to ensure it is in place. If an application wants to connect to multiple bearer systems, say USSD and SMS, then it must make multiple bind calls:
socket = wdc_connect(bearer);
e.g.
socketSMS = wdc_connect(GSM_SMS);
Returns
Success: This function returns a non-NULL connection identifier which will be used by all further calls to this bearer until the connection is terminated.

Failure: The function returns null and stores an error in the global error number variable.

### wdc_close

This tells the bearer module that the server application is disconnecting. All resources allocated to using the bearer should be freed.
wdc_close(socketSMS);

### wdc_send

Is used to send information to a data gateway via a bearer module using the layer 1.

### wdc_get

Is used to read information from a data gateway via a bearer module using the layer 1.

### wdc_log

wdc_log(socket, severity, msg);

An example is:
wdc_log(socketSMS, WARNING, "Less the 10 % Memory remaining.");

Regarding billing and prepaid queries, one of the areas the layer 1 simplifies is the complex area of interfacing to telecom billing and prepaid systems. It is possible for an application to instruct the layer 1 to load and enable a billing sub module. The application may chose to enable the layer 1 to automatically log location URL and/or Volume of data as CRD for billing. This is only possible for WAP if the non-secure port is used.

### Wdc_cdr_mode(setting)

- VOLUME
- URL
- OFF

The INI setting "billing_module" points to the location of the billing module to load.

The application may call the layer 1 to create CDRs.
wdc_cdr_volume(CDR_HEADER, 400);
Log 400 bytes
wdc_cdr_url(CDR_HEADER, "http://www.wapforum.com/index.wml");

Other calls include Whitelist and Blacklist management, in which an application may enable automatic Black/White list checking. The application may call the layer 1 to check a URL against the Black/While list using :
wdc_check_mode(ON/OFF);
wdc_check_url(check_interface, url);
The INI parameter:
"Black_while_list" indicates the file to use.

### wdc_parm

This is used by applications for parameter reading:
err_code_t wdc_parm(bearer_tag, wdc_param_t, *parameter);

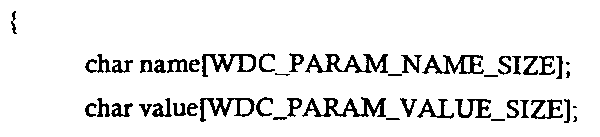

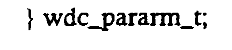

This call is used to get a value of a configuration parameter from one of the configuration files. The wdc_module parameter selects which of the module - MAIN or one of the bearers is queried. Having a separate configuration file for each bearer module is necessary to prevent naming conflicts when bearer modules are provided by third parties.

### RETURNS

Success: The function returns and ERR_OK and the value of the parameter is placed in the value field of the structure.

Failure: The function returns a non-zero error number.

Callbacks are provided by the layer 1 to allow an application request that it handles various events:
wdc_callback(item, handler)

ERROR - allows the application register its own handler for error conditions this is useful it the application already has an error logging facility that it wishes to use.

LOG - allow an application to register its own handler for logging messages.

It will be appreciated that the invention provides for excellent versatility for both bearer-side and server-side development. The interface layer 1 also allows the addition of new bearers as they become available, and the application to utilise 'intelligent' selection of bearers.

The invention is not limited to the embodiments described, but may be varied in construction and detail.

## Claims

1. A wireless server hosting server applications comprising an interface layer (1), the interface layer (1) comprising a uniform interface (10) providing uniform interfacing to the server applications, and a bearer interface having a program associated with each of a plurality of bearer systems, **characterised in that**,
each of said programs is a bearer module (20);
the bearer interface comprises a bearer module interface (11) comprising means for binding said bearer modules (20);
the interface layer (1) further comprises, between the uniform interface (10) and the bearer module interface (11):-
a bearer manager (12) comprising means for registering bearer modules (20) in response to server application calls, and for indicating bearer module status;
a configuration manager (13) comprising means for maintaining a configuration file of registered bearer modules (20), for responding to server application calls for a configuration list and for returning information regarding network type, bearer system type, and address type to server applications.

2. A server as claimed in claim 1, wherein the configuration manager comprises means for capturing bearer module information.

3. A server as claimed in claims 1 or 2, wherein the configuration manager comprises means for maintaining a configuration file for every bound bearer module.

4. A server as claimed in any preceding claim, wherein the bearer manager comprises means for responding to server application calls to register a bearer module.

5. A server as claimed in claim 4, wherein the bearer manager comprises means for making a bind attempt to bind a bearer module to a transport mechanism.

6. A server as claimed in any preceding claim wherein the bearer manager comprises means for responding to application calls to disconnect from a bearer module.

7. A server as claimed in any preceding claim, wherein the interface layer includes a blacklist and whitelist manager comprising means for automatically testing all non-secure traffic.

8. A server as claimed in claim 7, wherein the blacklist and whitelist manager comprises means for filtering traffic according to parameters set by a server application.

9. A server as claimed in any preceding claim wherein the interface layer includes a callback handler comprising means for allowing a server application to call routines for pre-processing and post-processing of WDP packets.

10. A server as claimed in any preceding claim, wherein the interface layer includes a log function comprising means for logging test data from a bearer module under test, and for providing said data to a requesting server application.

11. A server as claimed in any preceding claim, wherein the interface layer includes a billing function comprising means for generating billing data on the basis of criteria supplied by a server application.

12. A server as claimed any preceding claim comprising WSP and WTP layers over the interface layer.

## Patentansprüche

1. Drahtloser Hostserver für Serveranwendungen, der Folgendes umfasst: eine Schnittstellenschicht (1), die eine gleichförmige Schnittstelle (10) umfasst, die eine gleichförmige Verbindung zu den Serveranwendungen herstellt, und eine Trägerschnittstelle mit einem Programm, das mit jedem aus einer Mehrzahl von Trägersystemen assoziiert ist, **dadurch gekennzeichnet, dass**
jedes der genannten Programme ein Trägermodul (20) ist;
die Trägerschnittstelle eine Trägermodulschnittstelle (11) umfasst, die Mittel zum Binden der genannten Trägermodule (20) umfasst;
die Schnittstellenschicht (1) zwischen der gleichförmigen Schnittstelle (10) und der Trägermodulschnittstelle (11) ferner Folgendes umfasst:
einen Trägermanager (12), der Mittel zum Registrieren von Trägermodulen (20) als Reaktion auf Serveranwendungsanrufe und zum Anzeigen des Trägermodulstatus umfasst;
einen Konfigurationsmanager (13), der Mittel zum Führen einer Konfigurationsdatei von registrierten Trägermodulen (20) umfasst, um auf Serveranwendungsanrufe um eine Konfigurationsliste zu antworten und Informationen über Netzwerktyp, Trägersystemtyp und Adresstyp zu Serveranwendungen zurückzugeben.

2. Server nach Anspruch 1, wobei der Konfigurationsmanager Mittel zum Erfassen von Trägermodulinformationen umfasst.

3. Server nach Anspruch 1 oder 2, wobei der Konfigurationsmanager Mittel zum Führen einer Konfigurationsdatei für jedes gebundene Trägermodul umfasst.

4. Server nach einem der vorherigen Ansprüche, wobei der Trägermanager Mittel zum Antworten auf Serveranwendungsanrufe zum Registrieren eines Trägermoduls umfasst.

5. Server nach Anspruch 4, wobei der Trägermanager Mittel zum Durchführen eines Bindungsversuchs zum Binden eines Trägermoduls an einen Transportmechanismus umfasst.

6. Server nach einem der vorherigen Ansprüche, wobei der Trägermanager Mittel zum Antworten auf Anwendungsanrufe zum Trennen von einem Trägermodul umfasst.

7. Server nach einem der vorherigen Ansprüche, wobei die Schnittstellenschicht einen Blacklist- und Whitelist-Manager beinhaltet, der Mittel zum automatischen Testen von sämtlichem unsicherem Verkehr umfasst.

8. Server nach Anspruch 7, wobei der Blacklist- und Whitelist-Manager Mittel zum Filtern von Verkehr gemäß Parametern umfasst, die von einer Serveranwendung festgelegt wurden.

9. Server nach einem der vorherigen Ansprüche, wobei die Schnittstellenschicht einen Callback-Handler aufweist, der Mittel umfasst, um es einer Serveranwendung zu gestatten, Routinen zur Vorverarbeitung und Nachverarbeitung von WDP-Paketen abzurufen.

10. Server nach einem der vorherigen Ansprüche, wobei die Schnittstellenschicht eine Log-Funktion beinhaltet, die Mittel zum Protokollieren von Testdaten von einem unter Test befindlichen Trägermodul und zum Senden der genannten Daten zu einer anfordernden Serveranwendung umfasst.

11. Server nach einem der vorherigen Ansprüche, wobei die Schnittstellenschicht eine Berechnungsfunktion aufweist, die Mittel zum Erzeugen von Berechnungsdaten auf der Basis von Kriterien umfasst, die von einer Serveranwendung aufgestellt werden.

12. Server nach einem der vorherigen Ansprüche, der WSP- und WTP-Schichten über der Schnittstellenschicht umfasst.

## Revendications

1. Un serveur sans fil hébergeant des applications serveur comprenant une couche d'interface (1), cette couche d'interface (1) comprenant une interface uniforme (10) fournissant un interfaçage uniforme avec les applications serveur et une interface support possédant un programme associé à chaque système d'une pluralité de systèmes supports, **caractérisé par le fait que** :
chacun desdits programmes est un module support (20) ;
l'interface support comprend une interface de module support (11) comprenant un moyen de relier lesdits modules supports (20) ;
la couche d'interface (1) comprend en outre, entre l'interface uniforme (10) et l'interface du module support (11) :
un gestionnaire de supports (12) comprenant un moyen d'enregistrer les modules supports (20) en réponse aux appels des applications serveur et pour indiquer l'état du module support ;
un gestionnaire de configuration (13) comprenant un moyen d'entretenir un fichier de configuration des modules supports enregistrés (20) pour répondre aux appels des applications serveur demandant une liste de configuration et pour renvoyer des informations relatives au type de réseau, au type de système support et au type d'adresse aux applications serveur.

2. Un serveur selon la Revendication 1 où le gestionnaire de configuration comprend un moyen de capturer des informations de module support.

3. Un serveur selon la Revendication 1 ou 2 où le gestionnaire de configuration comprend un moyen d'entretenir un fichier de configuration pour chaque module support lié.

4. Un serveur selon l'une quelconque des Revendications précédentes où le gestionnaire de supports comprend un moyen de répondre aux appels des applications serveur pour enregistrer un module support.

5. Un serveur selon la Revendication 4 où le gestionnaire de supports comprend un moyen d'effectuer une tentative de lien afin de lier un module support à un mécanisme de transport.

6. Un serveur selon l'une quelconque des Revendications précédentes où le gestionnaire de supports comprend un moyen de répondre aux appels des applications serveur pour se déconnecter d'un module support.

7. Un serveur selon l'une quelconque des Revendications précédentes où la couche d'interface comprend un gestionnaire de liste noire et de liste blanche comprenant un moyen de tester automatiquement tout le trafic non protégé.

8. Un serveur selon la Revendication 7 où le gestionnaire de liste noire et de liste blanche comprend un moyen de filtrer le trafic en fonction de paramètres définis par une application serveur.

9. Un serveur selon l'une quelconque des Revendications précédentes où la couche d'interface comprend un gestionnaire des rappels comprenant un moyen de permettre à une application serveur d'appeler des routines pour le prétraitement et le post-traitement de paquets WDP.

10. Un serveur selon l'une quelconque des Revendications précédentes où la couche d'interface comprend une fonction de mise en fichier journal comprenant un moyen de consigner dans un fichier journal des données de test d'un module support soumis à test et pour fournir lesdites données à une application serveur demandeuse.

11. Un serveur selon l'une quelconque des Revendications précédentes où la couche d'interface comprend une fonction de facturation comprenant un moyen de générer des données de facturation sur le base de critères fournis par une application serveur.

12. Un serveur selon l'une quelconque des Revendications précédentes comprenant des couches WSP et WTP placées au-dessus de la couche d'interface.
